# FASCICULE DE BREVET EUROPEEN

(11) **EP 3 739 698 B1**
(45) Date de publication et mention de la délivrance du brevet: **09.03.2022**
(21) Numéro de dépôt: 20174040.4
(22) Date de dépôt: 12.05.2020
(51) Int. Cl.: G01B 11/00, H01R 43/28, H01R 43/20

(54) **PROCÉDÉ ET DISPOSITIF D'INSERTION DE COSSES MONTÉES EN EXTRÉMITÉ DE FILS TORSADÉS ENTRE EUX**
VERFAHREN UND VORRICHTUNG ZUM EINSETZEN VON KABELSCHUHEN, DIE AN DEN ENDEN VON MITEINANDER VERDRILLTEN DRÄHTEN MONTIERT SIND
METHOD AND DEVICE FOR INSERTING TERMINALS MOUNTED ON THE END OF WIRES TWISTED WITH ONE ANOTHER

(30) Priorité: 14.05.2019 FR 1904993
(43) Date de publication de la demande: 18.11.2020
(73) Titulaire: Komax Holding AG, 6036 Dierikon (CH)
(72) Inventeur: CELOUDOUX, Jean-Paul, 13100 AIX EN PROVENCE (FR); RICHARD, Jean-Yves, 13100 AIX EN PROVENCE (FR); DECROUX, Christian, 74200 ARMOY (FR); MALET, Yves, 13127 VITROLLES (FR)
(74) Mandataire: Inventio AG

(56) Documents cités:
- EP-A1- 3 301 769
- WO-A1-2018/198741
- JP-A- H11 260 526
- JP-A- 2001 176 340

## Description

L'invention s'intéresse au domaine de la fabrication des faisceaux électriques formés d'une pluralité de fils dont les extrémités sont insérées dans des connecteurs.

Le document EP 3 301 769 A1 dévoile le préambule de la revendication 1.

Des machines spéciales, conçues à cet effet, sont largement utilisées pour fabriquer des faisceaux électriques à destination de l'industrie automobile, de l'industrie aéronautique ou encore de l'industrie de l'électroménager.

Ces machines comprennent une partie amont dans laquelle un fil est coupé à une longueur désirée. Les deux extrémités du fil sont dénudées et généralement serties d'une cosse pour former une terminaison destinée à établir un contact électrique.

Ces fils se présentent sous la forme de fils uniques ou, dans le cas qui intéresse l'invention sous la forme d'une paire de fils torsadés entre eux. Chaque paire de fils comprend donc deux cosses à chacune de ses extrémités.

On observe toutefois que la longueur de fil libre entre la partie torsadée et la cosse est alors réduite et n'autorise pas l'introduction d'une cosse dans une alvéole indépendamment de l'introduction de la deuxième cosse.

Il en résulte une proximité entre les cosses rendant difficile une action sur une deux cosses sans subir l'interaction de l'autre cosse. En particulier lorsque, pour des raisons de qualité, on s'oblige à exécuter les opérations d'insertion en ne saisissant que les fils en s'interdisant tout contact des organes de manipulation avec les cosses elles-mêmes.

L'invention a pour objet de proposer un procédé et un dispositif permettant d'insérer, selon une séquence originale, deux cosses serties respectivement à l'extrémité de deux fils torsadés entre eux.

Au cours du procédé selon l'invention d'insertion dans une première et une deuxième alvéole d'un connecteur, on exécute les étapes suivantes :
- Etape A : on saisit, du côté de l'extrémité des fils proche de la cosse, le premier et le deuxième fil respectivement à l'aide d'une première et d'une deuxième pince de maintien,
- Etape B : on translate la première pince de maintien par rapport à la deuxième pince de maintien dans une direction parallèle à une direction d'insertion de la cosse dans l'alvéole, de manière à créer un décalage longitudinal d'une valeur donnée entre l'extrémité de la première cosse et l'extrémité de la deuxième cosse,
- Etape C : à l'aide d'une pince d'insertion montée sur la tête d'un robot apte à déplacer ladite pince d'insertion en translation dans trois directions indépendantes et en rotation autour de chacune de ces trois directions, on saisit simultanément le premier et le deuxième fil en un point de saisie disposé entre les pinces de maintien et les cosses, et on libère les pinces de maintien,
- Etape D : à l'aide d'un moyen de séparation on déplace le premier fil de manière à créer un écart angulaire entre le premier et le deuxième fil,
- .Etape E : à l'aide du robot, on fait avancer la pince d'insertion (41) selon la direction d'insertion (XX') de manière à présenter la deuxième cosse (11) dans le champ de vision d'une première caméra (81) et d'une deuxième caméra (82), lesdits champs de vision étant orientés selon deux axes orthogonaux (ZZ', YY') situés dans un plan perpendiculaire à la direction d'insertion (XX') et, à l'aide des images formées par chacune des caméras (81, 82), on détermine la position (α₂₁, α₂₂, t₂₁, t₂₂), dans le repère (OXYZ), d'un axe longitudinal (L₂L'₂) de la deuxième cosse (12), ainsi que la position angulaire (α₂₃) de la deuxième cosse autour de l'axe d'insertion (X₂X'₂) de la deuxième cosse (12) dans son alvéole (32),
- .Etape F : à l'aide du robot, on fait tourner la pince d'insertion d'un angle (-α, -αₘ) égal et de signe opposé à l'écart angulaire (α, αₘ) entre le premier et le deuxième fil conféré à l'étape D, et on présente la première cosse (11) dans le champ de la première caméra et de la deuxième caméra (81, 82) et, à l'aide des images formées par chacune des caméras, on détermine la position dans le repère (OXYZ) d'un axe longitudinal (L₁L'₁) de la première cosse, ainsi que la position angulaire (α₁₃) de la première cosse autour de l'axe d'insertion,
- Etape G : à l'aide du robot, on fait tourner et on déplace (α₁₁, α₁₂, t₁₁, t₁₂) la pince d'insertion (40) de manière à confondre l'axe longitudinal (L₁L'₁) de la première cosse avec l'axe d'insertion (X₁X'₁) de la première cosse dans la première alvéole, on ajuste la position angulaire (α₁₃) de la première cosse (11) autour de la direction d'insertion (X₁X'₁) par rapport à la position angulaire de l'alvéole, et on pré insère la première cosse dans la première alvéole sur une profondeur (p₁) donnée,
- .Etape H : à l'aide du robot on fait tourner et on déplace (α₂₁, α₂₂, t₂₁, t₂₂) la pince d'insertion (40) de manière à confondre l'axe longitudinal (L₂L'₂) de la deuxième cosse (12) avec l'axe d'insertion (X₂X'₂) de la deuxième cosse (12) dans la deuxième alvéole (32), on ajuste la position angulaire (α₂₃) de la deuxième cosse (12) autour de la direction d'insertion (X₂X'₂) par rapport à la position angulaire de la deuxième alvéole (32), et on pré insère la deuxième cosse (12) dans la deuxième alvéole (32) sur une profondeur (p₂) donnée, tout en poursuivant l'insertion de la première cosse (11) dans son alvéole (31).

En créant un écart angulaire suffisant entre les cosses situées aux extrémités de chacun des fils, il devient possible d'introduire séparément chacune des cosses dans le champ de vision des caméras pour déterminer avec précision la position dans l'espace de chacune des cosses.

Cet écart angulaire autorise des déplacements de la pince d'insertion réduits, mais d'ampleurs suffisantes, pour réaliser les opérations de mesure de la position des cosses ainsi que l'insertion de ces dernières dans leurs alvéoles respectives sans qu'il soit nécessaire de saisir les cosses et en ne relâchant les fils que lorsque les cosses sont en place dans les alvéoles.

Le procédé selon l'invention peut aussi comprendre isolément, ou en combinaison, les caractéristiques suivantes :

On crée l'écart angulaire entre le premier et le deuxième fil en déplaçant le premier fil supportant la première cosse disposée longitudinalement en avant de la deuxième cosse.

Le décalage longitudinal entre la première et la deuxième cosse est compris entre 3mm et 10mm.

L'écart angulaire entre le premier et le deuxième fil est compris entre 45° et 90°.

A l'issue de l'étape H on exécute les étapes suivantes :
- Etape I : à l'aide du robot on déplace la pince d'insertion dans la direction d'introduction et on insère simultanément la première et la deuxième cosse dans leurs alvéoles respectives jusqu'à ce que la première cosse soit complètement insérée,
- Etape J : on saisit simultanément le premier et le deuxième fil à l'aide d'une pince de reprise en amont de la pince d'insertion,
- Etape K : on relâche la pince d'insertion et on fait coulisser ladite pince d'insertion sur la tête du robot pour saisir le seul deuxième fil en un point de saisie situé entre la pince de reprise et la deuxième cosse,
- Etape L : à l'aide du robot on déplace la pince d'insertion dans la direction d'introduction jusqu'à ce que la deuxième cosse soit complètement insérée.

Aux étapes l'et L', à l'issue respectivement des étapes I et L, lorsqu'une cosse est complètement insérée, on exerce à l'aide du robot une force d'amplitude donnée dans la direction inverse à la direction d'insertion et on émet une alerte lorsque l'application de cette force a pour effet de faire ressortir ladite cosse de l'alvéole.

Pendant l'insertion des cosses dans les alvéoles du connecteur, on mesure une force d'insertion et on émet une alerte lorsque ladite force d'insertion est supérieure ou inférieure à des seuils prédéterminés en fonction de la profondeur d'insertion.

On ajuste la position de la première pince de maintien par rapport à la position de la deuxième pince de maintien de sorte que la distance entre l'axe longitudinal de la première cosse et l'axe longitudinal de la deuxième cosse, soit sensiblement égale à la distance entre l'axe d'insertion de la première cosse dans la première alvéole et l'axe d'insertion de la deuxième cosse dans la deuxième alvéole.

A une étape C', après avoir achevé l'étape C et préalablement à l'étape D, à l'aide d'un centreur, on positionne les fils situés entre les cosses et la pince d'insertion sensiblement dans un plan prédéterminé.

L'invention intéresse également un dispositif pour mettre en oeuvre le procédé comprenant :
- une première et une deuxième pince de maintien aptes à se déplacer l'une par rapport à l'autre selon une direction d'insertion,
- une pince d'insertion pour saisir simultanément le premier et le deuxième fil fixée sur la tête d'un robot apte à déplacer ladite pince d'insertion en translation dans trois directions indépendantes (XX', YY', ZZ') et en rotation autour de chacune de ces trois directions,
- une pince de reprise,
- un moyen de séparation pour créer un écart angulaire entre le premier et le deuxième fil,
- une première caméra et une deuxième caméra dont les champs de vision sont orientés selon deux axes orthogonaux situés dans un plan perpendiculaire à la direction d'insertion,
- une unité centrale reliée au robot et aux caméras comprenant des instructions codées pour analyser les images provenant desdites caméras et piloter les mouvements de la première et de la deuxième pince de maintien, de la pince de reprise, des moyens de séparation et de la tête du robot supportant la pince d'insertion pour exécuter les étapes du procédé ci-dessus.

### Brève description des figures

L'invention sera mieux comprise à la lecture de la description qui va suivre donnée uniquement à titre d'exemple et faite en se référant aux dessins annexés dans lesquels :
[Fig. 1] La figure 1 illustre la position des cosses et des fils à l'issue de l'étape A.
[Fig. 2] La figure 2 illustre la position des cosses et des fils à l'issue de l'étape B.
[Fig. 3] La figure 3 illustre les mouvements des cosses et des fils opérés au cours de l'étape C.
[Fig. 4] La figure 4 illustre les mouvements des cosses et des fils opérés au cours de l'étape C.
[Fig. 4a] La figure 4a est une vue schématique en perspective du centreur.
[Fig. 5] La figure 5 illustre la position des cosses et des fils à l'issue de l'étape D.
[Fig. 5a] La figure 5a est une vue schématique en perspective illustrant le mouvement du moyen de séparation au cours de l'étape D.
[Fig. 5b] La figure 5b est une vue schématique en perspective illustrant le mouvement du moyen de séparation au cours de l'étape D.
[Fig. 6] La figure 6 illustre la position de la cosse dans le repère OXYZ de la machine d'insertion.
[Fig. 7] La figure 7 illustre les mouvements des cosses et des fils opérés au cours de l'étape E.
[Fig. 8] la figure 8 illustre les mouvements des cosses et des fils opérés au cours de l'étape E.
[Fig. 8a] La figure 8a illustre les mouvements des cosses et des fils opérés au cours de l'étape E.
[Fig. 9] La figure 9 illustre les mouvements des cosses et des fils opérés au cours de l'étape E.
[Fig. 10] La figure 10 illustre les mouvements des cosses et des fils opérés au cours de l'étape F.
[Fig. 11] La figure 11 illustre les mouvements des cosses et des fils opérés au cours de l'étape F.
[Fig. 11a] La figure 11a illustre les mouvements des cosses et des fils opérés au cours de l'étape F.
[Fig. 12] La figure 12 illustre les mouvements des cosses et des fils opérés au cours de l'étape F.
[Fig. 13] La figure 13 illustre les mouvements des cosses et des fils opérés au cours de l'étape G
[Fig. 14] La figure 14 illustre les mouvements des cosses et des fils opérés au cours de l'étape G.
[Fig. 15] La figure 15 illustre les mouvements des cosses et des fils opérés au cours de l'étape H.
[Fig. 16] la figure 16 illustre les mouvements des cosses et des fils opérés au cours de l'étape H.
[Fig. 17] La figure 17 illustre les mouvements des cosses et des fils opérés au cours des étapes I et I'.
[Fig. 18] La figure 18 illustre les mouvements des cosses et des fils opérés au cours des étapes I et I'.
[Fig. 19] La figure 19 illustre les mouvements des cosses et des fils opérés au cours de l'étape J.
[Fig. 20] La figure 20 illustre les mouvements des cosses et des fils opérés au cours de l'étape K
[Fig. 21] La figure 21 illustre les mouvements des cosses et des fils opérés au cours de l'étape K.
[Fig. 22] La figure 22 illustre les mouvements des cosses et des fils opérés au cours des étapes L et L'.
[Fig. 23] La figure 23 illustre les mouvements des cosses et des fils opérés au cours des étapes L et L'.
[Fig. 24] La figure 24 illustre les positions des cosses à l'étape finale du procédé.

### Description détaillée

Dans ce qui suit, il sera fait référence au repère orthonormé OXYZ principal dans lequel se situe le dispositif d'insertion. Pendant l'exécution d'un cycle de positionnement et d'insertion, les coordonnées et les orientations angulaires des pinces de maintien, du moyen de séparation, du centreur, de la pince de reprise, la position de chacun des connecteurs et de chacune des alvéoles, la position de chacune des caméras ainsi que l'orientation des champs de vision sont connues à chaque instant dans ce repère.

De même, les coordonnées et l'orientation de la pince d'insertion supportée par le robot six axes sont également connues au cours et à l'issue de chaque mouvement du robot.

Par convention, l'axe OX ou XX' représente la direction d'insertion de la cosse dans l'alvéole du connecteur dans laquelle on désire introduire ladite cosse. Dans un plan perpendiculaire à la direction OX, la direction OZ, ou ZZ', représente la direction verticale et la direction OY, ou YY', représente la direction transversale. Les directions OY et OZ sont perpendiculaires entre elles. On observe ici que, dans le repère principal du dispositif d'insertion, le repère OXYZ change à chaque changement d'alvéole.

Il est alors possible de concevoir qu'un ou plusieurs éléments du dispositif puissent être disposés dans un sous-repère qui leur est propre et dont les coordonnées sont connues par rapport au repère principal de la machine et par rapport au repère OXYZ de l'alvéole à équiper. Le passage d'un sous-repère au repère principal du dispositif ou au repère OXYZ de l'alvéole se fait alors par un simple changement de repère déterminé par calcul par l'unité centrale.

En préambule aux opérations d'insertion proprement dites, il est admis ici que les opérations de sertissage de la cosse, considérée comme rigide et non déformable, sur l'extrémité du fil, considéré comme pouvant subir des déformations, sont réalisées en amont du dispositif d'insertion.

A **l'étape A,** qui est la première étape du procédé proprement dit, les fils 21 et 22 sont saisis par une première pince et une deuxième pince de maintien, respectivement 71 et 72. On observera que les fils 21 et 22 sont torsadés en amont des pinces de maintien 71 et 72 et que ces dernières saisissent chacun des fils dans la partie terminale de la tresse dans laquelle les deux fils sont libres. Des cosses, respectivement 11 et 12, sont serties à l'extrémité des fils 21 et 22. L'axe longitudinal de chacune des cosses 11 et 12 est repéré respectivement par les lignes L₁L'₁ et L₂L'₂. L'axe des pinces de maintien aux points de saisie est prédéterminé dans le repère OXYZ.

L'étape A est généralement précédée d'une série d'étapes aboutissant au pré positionnement des parties libres des deux fils 21 et 22, afin qu'ils puissent être saisis séparément l'un de l'autre par les deux pinces de maintien 71 et 72.

Les pinces de maintien 71 et 72 sont disposées de sorte que, au point de saisie, l'axe des pinces est aligné avec l'axe d'insertion XX'.

A titre d'exemple, il est possible de prévoir que la première et la deuxième pince de maintien, respectivement 71 et 72, sont aptes à faire tourner le fil autour de l'axe du fil. Préalablement à l'étape, on pré-positionne angulairement la cosse autour de la direction d'insertion de sorte que, au cours des étapes d'alignement des cosses avec les alvéoles du connecteur, on fait tourner la cosse autour de l'axe d'insertion selon un sens de rotation prédéterminé.

Dans les représentations schématiques servant à illustrer les animations des cosses et des fils qui suivent, les fils et les cosses sont représentés par convention dans le plan horizontal XOY de la feuille de dessin perpendiculaire à la direction ZZ'. Il va de soi, comme cela sera expliqué par la suite, que les fils et les cosses n'appartiennent pas rigoureusement au même plan en raison des déformations des fils entre le point de saisie du fil et la cosse et que les axes L₁L'₁ et L₂L'₂ ne sont donc pas rigoureusement parallèles entre eux ni coplanaires.

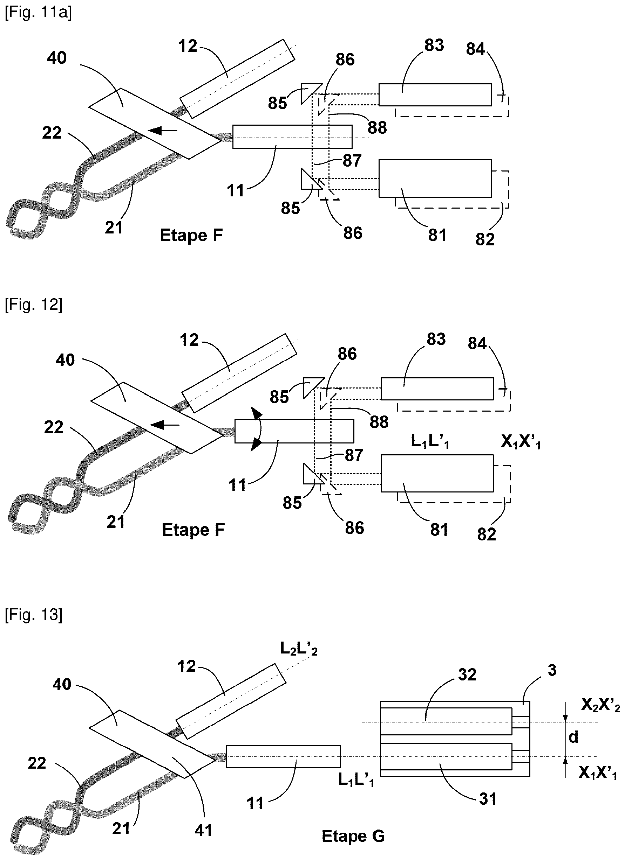

On positionne toutefois les pinces de maintien 71 et 72 de sorte que, à l'issue de l'étape A, les axes L₁L'₁ et L₂L'₂ sont sensiblement distants l'un de l'autre d'une distance d, égale à la distance entre les axes X₁X'₁ et X₂X'₂ des alvéoles 31 et 32 (voir figures 13 et suivantes) dans lesquelles les cosses 11 et 12 sont destinées à être insérées. Les axes X₁X'₁ et X₂X'₂ sont en général parallèles entre eux.

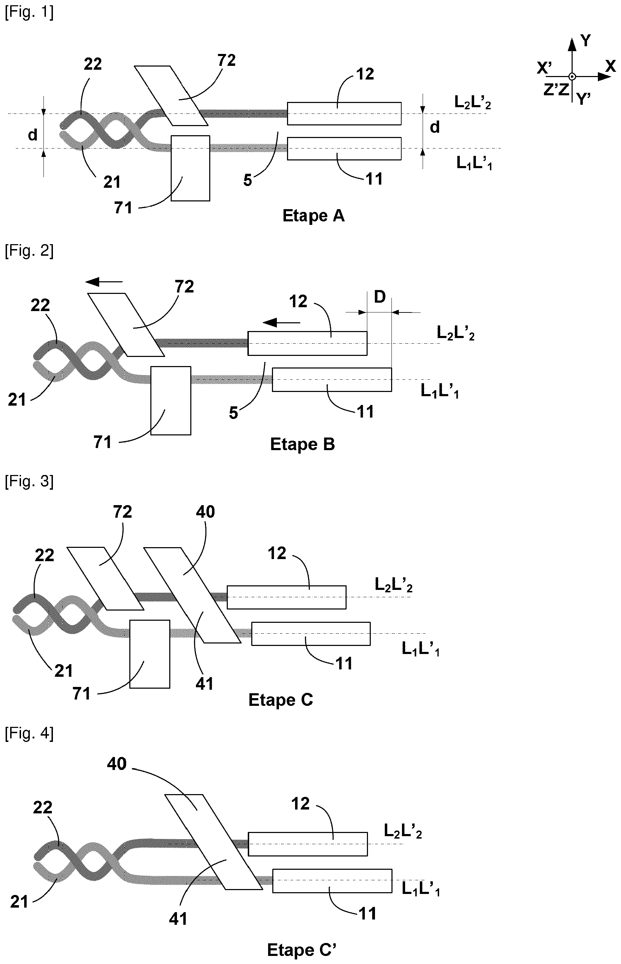

A **l'étape B,** illustrée à la figure 2, on translate la première pince de maintien 71 par rapport à la deuxième pince de maintien 72 dans une direction parallèle à la direction XX' d'insertion de la cosse dans l'alvéole, de manière à créer un décalage longitudinal d'une valeur donnée D entre l'extrémité de la première cosse 11 et l'extrémité de la deuxième cosse 12.

Cette distance D peut utilement être comprise entre 3mm et 10mm.

A **l'étape C,** à l'aide d'une pince d'insertion 40, on saisit simultanément le premier et le deuxième fil, respectivement 11 et 12, en un point de saisie 41 disposé entre les pinces de maintien, respectivement 71 et 72, et les cosses, respectivement 11 et 12.

La pince d'insertion 40 est montée sur la tête d'un robot (non représenté) de type six axes, apte à déplacer ladite pince d'insertion 40 en translation dans trois directions indépendantes XX', YY', ZZ' et en rotation autour de chacune de ces trois directions.

Un vérin (non représenté) entraine en translation selon la direction transversale la pince d'insertion 40 sur la tête du robot. Comme on le verra par la suite (étape K), ce coulissement permet de déplacer la pince d'insertion 40 sans qu'il soit nécessaire de déplacer la tête du robot.

La position dans le repère OXYZ de la pince d'insertion 40, ainsi que l'alignement de la pince d'insertion, et donc des fils, au point de saisie 41 sont connus à chaque instant.

Le pilotage des mouvements de la pince d'insertion dans le repère OXYZ est assuré par une unité centrale, reliée aux différents organes du dispositif d'insertion, comprenant des instructions codées pour analyser les images provenant desdites caméras et piloter les mouvements de la première et la deuxième pince de maintien, de la pince de reprise, du moyen de séparation et de la tête du robot supportant la pince d'insertion.

La pince d'insertion 40 comprend deux mâchoires venant enserrer simultanément les fils 11 et 12 de sorte que les fils ne subissent aucun déplacement par rapport à la pince d'insertion 40 pendant l'exécution des étapes ultérieures de mise en œuvre du procédé selon l'invention. Pour ce faire, la surface des mâchoires peut utilement être recouverte d'un revêtement comprenant des rugosités calibrées de manière à ne pas détériorer l'isolant recouvrant la partie conductrice de l'électricité.

On s'arrange pour que le point de saisie de chacun des fils soit disposé au plus près de chacune des cosses. Aussi, compte tenu de l'écart longitudinal entre les deux cosses il peut s'avérer utile d'incliner légèrement la pince d'insertion 40 de sorte que les distances entre les points de saisie de chacun des fils et les cosses serties à l'extrémité de ces fils soient sensiblement égales.

Une fois la tenue des fils dans la pince d'insertion 40 assurée, on libère les pinces de maintien, respectivement 71 et 72.

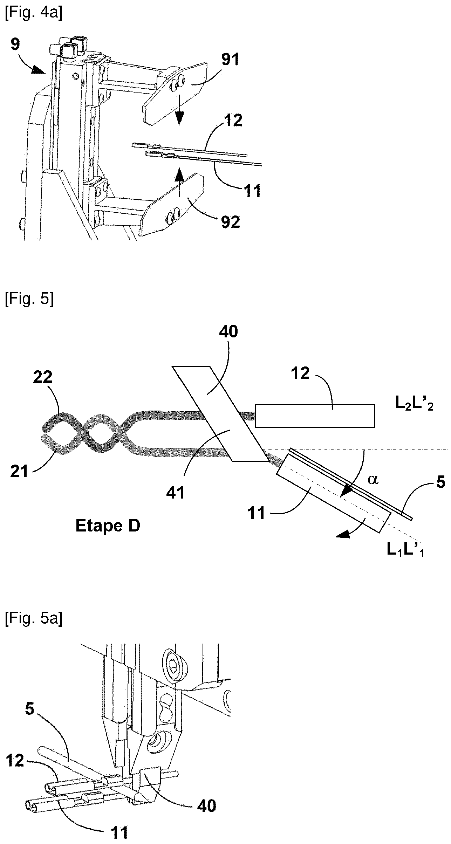

A l'issue de l'étape C et au cours d'une étape C', de manière optionnelle, il est possible, à l'aide d'un centreur 9, de procéder à un alignement des fils. Le centreur, illustré à la figure 4a comprend deux palettes 91 et 92 se déplaçant le long de la direction verticale qui viennent exercer une pression sur les fils 21 et 22, entre la pince d'insertion 40 et les cosses 11 et 12, de manière à ramener les axes des cosses L₁L'₁ et L₂L'₂ au plus près du plan horizontal OXY en créant une déformation permanente des fils 21 et 22.

A l'issue de cette étape C', les déviations de la position des cosses 11 et 12 par rapport à un plan horizontal sont réduites sans pour autant être ramenées à zéro.

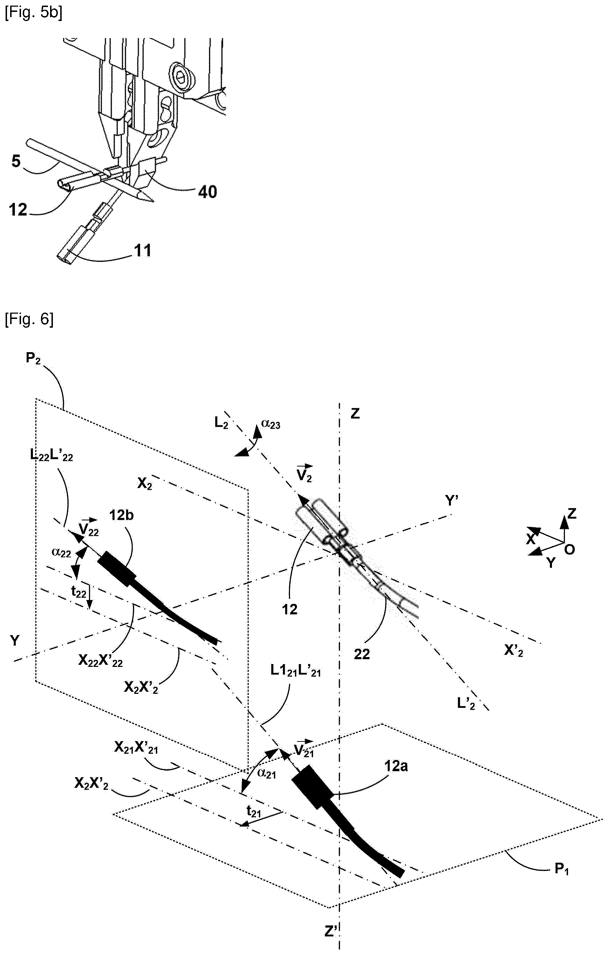

A **l'étape D,** la tête du robot déplace la pince d'insertion au droit d'un moyen de séparation 5. Ce moyen de séparation 5 a pour objet de créer un écart angulaire α, non nul, entre le premier et le deuxième fil, respectivement 11 et 12, comme cela est illustré à la figure 5.

Le moyen de séparation est ici formé d'une tige 5 qui vient s'insérer entre les deux fils 21 et 22, entre la pince d'insertion 40 et les cosses 11 et 12, sans venir en contact avec l'une d'elles. La tige 5 appuie alors sur un des deux fils et exerce sur ce dernier une pression apte à créer une déformation angulaire permanente dudit fil, de sorte que les deux fils font entre eux un écart angulaire de valeur α. Cet écart angulaire peut être créé indistinctement en déplaçant la tige ou en déplaçant la tête du robot supportant la pince d'insertion.

Dans le cas illustré à la figure 5, la rotation s'effectue autour d'un axe vertical centré sensiblement sur le centre de la pince.

On observera ici que, si le déplacement relatif de la pince d'insertion par rapport à la tige peut être préalablement défini, la valeur de l'écart angulaire α peut varier d'un fil à un autre en raison des contraintes élastiques qui ont pour objet de ramener le fil sur lequel la pression de la tige s'exerce à sa position d'origine. Aussi, comme on le verra par la suite, il peut s'avérer utile d'établir une moyenne αₘ de cette valeur.

Connaissant les caractéristiques des fils à insérer, on règle l'action de la tige de sorte que la valeur moyenne αₘ de l'écart angulaire résiduel entre les deux fils 11 et 12 soit comprise entre 45° et 90°. L'écart angulaire entre les fils a pour objet de permettre d'introduire les cosses de chacun des fils séparément dans le champ des caméras afin de déterminer l'orientation dans l'espace de chacune des cosses. Cet écart angulaire moyen αₘ est ajusté expérimentalement en fonction de l'encombrement des caméras et de la disposition des alvéoles de sorte que l'espace disponible entre les fils soit suffisant pour réaliser les étapes E à L qui suivent.

Préférentiellement, on agira sur le fil supportant la première cosse 11 dont l'extrémité est disposée longitudinalement en avant de la deuxième cosse 12.

La figure 6 permet d'illustrer, dans l'espace orthonormé OXYZ, les positions respectives de l'axe L₂L'₂ de la deuxième cosse 12 définie par un vecteur V₂, par rapport à la direction d'insertion X₂X'₂ de la deuxième cosse dans la deuxième alvéole 32, et à l'orientation angulaire de la deuxième cosse autour de l'axe d'insertion X₂X'₂.

Dans un plan P₁, perpendiculaire à l'axe vertical ZZ', la deuxième cosse 12 se projette selon un profil 12a. La projection V₂₁ du vecteur V₂ dans le plan P₁ fait un angle α₂₁ avec une droite X₂₁X'₂₁ appartenant au plan P₁ et parallèle à la direction d'insertion X₂X'₂ de la deuxième cosse 12 dans la deuxième alvéole 32.

Dans un plan P₂, perpendiculaire à l'axe vertical YY', la deuxième cosse 12 se projette selon un profil 12b. La projection V₂₂ du vecteur V₂ dans le plan P₂, fait un angle α₂₂ avec une droite X₂₂X'₂₂ appartenant au plan P₂ et parallèle à la direction d'insertion X₂X'₂.

Les droites X₂₁X'₂₁ et X₂₂X'₂₂ sont distantes respectivement d'une valeur t₁ et t2 dans les directions YY' et ZZ' de la direction d' insertion X₂X'₂ de la cosse dans la deuxième alvéole 32.

Enfin, la deuxième cosse 12 fait un angle α₂₃ autour de son axe longitudinal L₂L'₂ par rapport à la position angulaire de la deuxième cosse 12 autour de ce même axe longitudinal lorsque cette dernière est insérée dans la deuxième alvéole 32.

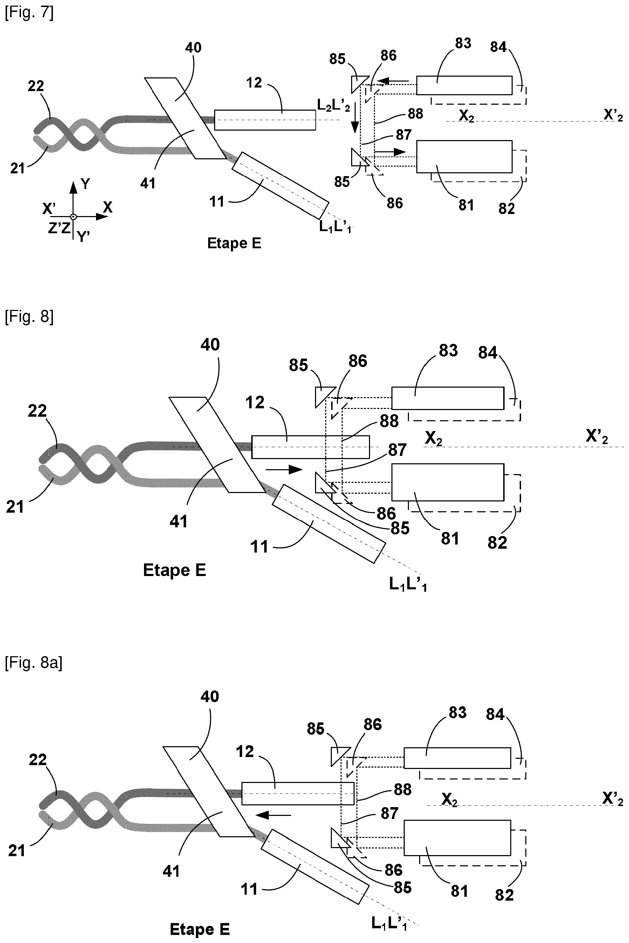

Les étapes E et F, illustrées aux figures 7 à 12, ont pour objet de déterminer les valeurs des angles α₂₁, α₂₂ et α₂₃, des translations t₂₁ et t₂₂, ainsi que la position de l'extrémité de la deuxième cosse, de manière à effectuer les corrections angulaires permettant d'aligner l'axe longitudinal L₂L'₂ de la deuxième cosse 12 avec l'axe d'introduction X₂X'₂ de la deuxième cosse 12 dans la deuxième alvéole 32.

De manière analogue, on détermine, en présentant la première cosse dans le champ des caméras, les valeurs α₁₁, α₁₂, les translations t₁₁ et t₁₂ et la valeur angulaire α₁₃, permettant d'aligner l'axe longitudinal L₁L'₁ de la première cosse 11 avec l'axe d'introduction X₁X'₁ de la première cosse 11 dans la première alvéole 31, sont définies de la même manière dans le repère OXYZ.

La détermination de ces valeurs s'appuie sur les enseignements de la demande EP N° 19161415.5, non publiée à la date de dépôt de la présente demande, dont les enseignements sont intégrés ici dans leur intégralité, et dont les principales caractéristiques sont reproduites succinctement ci-après pour mémoire.

Les figures 7, 8, 8a et 9 illustrent de manière schématique **l'étape E** aboutissant à la détermination du positionnement dans le repère OXYZ de l'axe L₂L'₂ de la deuxième cosse 12.

Dans le cas de la présente demande et en référence à la figure 7, cette détermination prévoit l'usage d'une première caméra linéaire 81 et d'une deuxième caméra linéaire 82, disposées de sorte que les champs de ces caméras sont orientés respectivement selon les directions YY' et ZZ'. Les caméras sont fixes dans le repère OXYZ.

Les caméras linéaires comprennent une ou plusieurs lignes de capteurs CCD ou CMOS, et permettent d'obtenir une image unidimensionnelle (une ligne) de la section d'un objet dans la direction du champ de la caméra.

Un premier émetteur de lumière 83 est disposé de manière à créer avec la première caméra linéaire 81 un rideau lumineux 87 formant un plan perpendiculaire à la direction d'insertion X'X. Un deuxième émetteur de lumière 84 est disposé de manière à créer avec la deuxième caméra linéaire 82 un rideau lumineux 88 formant un plan perpendiculaire à la direction d'insertion X'X. Les deux rideaux lumineux 87 et 88 se superposent pour former un rideau lumineux unique.

On observera ici que la deuxième caméra linéaire 82 et le deuxième émetteur de lumière 84 sont représentés en lignes pointillées dans le même plan que la première caméra linéaire 81 et que le premier émetteur de lumière 83. Aussi, pour une bonne compréhension de ce qui suit, il convient de faire subir à l'illustration de ces deux dispositifs lumineux une rotation imaginaire de 90° autour de l'axe d'introduction XX'.

Pour réduire l'encombrement des caméras et des émetteurs de lumière dans l'espace situé autour des rideaux lumineux, il peut s'avérer utile, comme cela est représenté dans les figures 7 et suivantes de disposer des réflecteurs, respectivement 85 et 86, sur le trajet lumineux des émetteurs de lumière, respectivement 83 et 84, associés à chacune des caméras linéaires, respectivement 81 et 82. En conséquence de quoi les caméras et les émetteurs de lumière peuvent être disposés selon une direction parallèle à l'axe d'introduction XX'. Les trajets des rayons lumineux sont représentés par des flèches.

La tête du robot approche la deuxième cosse 12 dans le rideau lumineux 87/88 de manière à présenter une section arrière de la deuxième cosse 12 dans le rideau lumineux, comme cela est représenté à la figure 8

L'image obtenue par la première caméra linéaire 81 permet de déterminer les coordonnées a_{z} du centre a de cette section arrière sur l'axe ZZ'.

L'image obtenue par la deuxième caméra linéaire 82 permet de déterminer les coordonnées a_{y} du centre a de ladite section arrière sur l'axe YY'.

Le centre a de la section arrière de la deuxième cosse qui est situé sur l'axe longitudinal L₂L'₂ de la cosse, a pour coordonnées (a_{y}, a_{z}) dans un plan OYZ perpendiculaire à la direction X₂X'₂ et passant par la section arrière de la deuxième cosse.

A l'aide du robot, on déplace vers l'arrière la deuxième cosse 12 selon la direction X₂X'₂ d'une valeur e prédéterminée, de manière à positionner une section avant de la deuxième cosse 12, distincte de la section arrière, dans le rideau lumineux, comme cela est illustré à la figure 8a.

L'image obtenue par la première caméra linéaire 81 permet de déterminer les coordonnées b_{z} du centre b de cette section avant sur l'axe ZZ'.

L'image obtenue par la deuxième caméra linéaire 82 permet de déterminer les coordonnées b_{y} du centre b de ladite section avant sur l'axe YY'.

Le centre b de la section avant, qui est également situé sur l'axe longitudinal L₂L'₂ de la deuxième cosse 12, a pour coordonnées (b_{y}, b_{z}) dans le plan OYZ perpendiculaire à la direction XX' et passant par la section avant de la deuxième cosse 12.

Connaissant les coordonnées des points a et b et la distance e, il est alors facile de calculer l'orientation du vecteur V₂ porté par l'axe longitudinal L₂L'₂ de la deuxième cosse 12 dans le repère OXYZ, ainsi que les valeurs des angles α₂₁ et α₂₂.

Connaissant la position dans le plan YOZ du point a (ou du point b) disposé sur l'axe LL' ainsi que la position dans ce plan de la projection de l'axe X₂X'₂, on en déduit aisément les valeurs t₁ et t₂ des translations à effectuer selon les directions YY' et ZZ'.

La détermination de la position de l'extrémité avant de la deuxième cosse 12 selon l'axe d'insertion X₂X'₂ est obtenue lorsque ce dernier traverse le champ lumineux 85 au moment de l'introduction ou du retrait de la deuxième cosse 12 du champ des caméras.

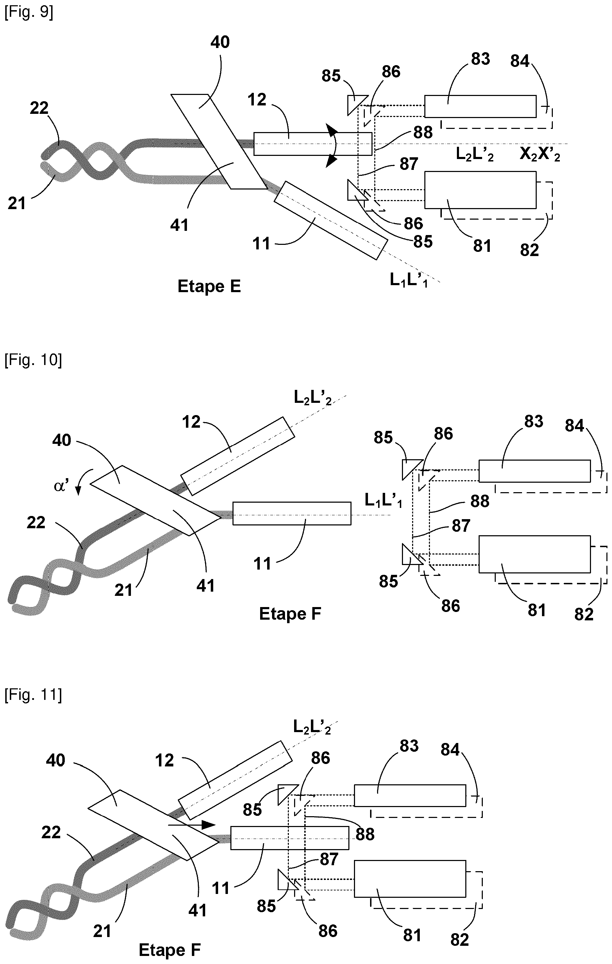

La détermination de l'orientation angulaire α₂₃, de la deuxième cosse 12 se fait après avoir aligné l'axe L₂L'₂ avec la direction d'introduction X₂X'₂ en effectuant les corrections angulaires α₂₁ et α₂₂. En référence à la figure 9, on maintient la deuxième cosse 12 dans le rideau lumineux et on fait tourner ladite cosse 12 autour de l'axe X₂X'₂, confondu à cet instant avec l'axe longitudinal L₂L'₂, jusqu'à ce que l'on obtienne une valeur maximale ou minimale des projections de la cosse dans les directions OY et OZ représentatives d'une position angulaire connue de la cosse autour de l'axe X₂X'₂.

A l'issue de l'étape E, on enregistre dans la mémoire de l'unité centrale les valeurs des angles α₂₁, α₂₂, α₂₃, des translations t₂₁, t₂₂, ainsi que la position de l'extrémité de la deuxième cosse dans l'espace OXYZ.

On observera ici, comme cela est décrit dans la demande de brevet EP N° 19161415.5 déjà citée, qu'il est également possible de déterminer la position de l'axe L₂L'₂ de la deuxième cosse en utilisant des caméras de champ en lieu et place de caméras linéaires.

On entame alors **l'étape F,** en faisant tourner à l'aide du robot la pince d'insertion 40 de l'angle prédéterminé - αₘ sensiblement égal et opposé à l'écart angulaire α imposé à l'étape D entre le premier et le deuxième fil, respectivement 21 et 22, comme cela est illustré à la figure 10.

Et on présente la première cosse 11 dans le champ de la première caméra 81 et de la deuxième caméra 82.

En référence aux figures 11, 11a et 12, et, à l'aide des images formées par chacune des caméras 81 et 82, on détermine la valeur des positions angulaires α₁₁ et α₁₂, des translations t₁₁ et t₁₂ dans le repère (OXYZ) de l'axe longitudinal (L₁L'₁) de la première cosse 11, ainsi que la position angulaire α₁₃ de la première cosse 11 autour de son axe d'insertion X₁X'₁ selon un mode opératoire similaire à celui exposé ci-dessus pour la détermination de la position de l'axe L₂L'₂ de la deuxième cosse.

A l'issue de l'étape F, on enregistre dans la mémoire de l'unité centrale les valeurs des angles α₁₁, α₁₂, α₁₃, des translations t₁₁, t₁₂, ainsi que la position de l'extrémité de la première cosse 11 dans l'espace OXYZ.

**A l'étape G** et en référence à la figure 13, on déplace à l'aide du robot la pince d'insertion 40, en effectuant les rotations de valeurs -α₁₁, -α₁₂, et les translations de valeur t₁₁ et t₁₂ de manière à confondre l'axe longitudinal L₁L'₁ de la première cosse 11 avec l'axe d'insertion X₁X'₁ de ladite première cosse 11 dans la première alvéole 31. On ajuste ensuite la position angulaire de la cosse autour de son axe longitudinal L₁L'₁ de la correction angulaire -α₁₃.

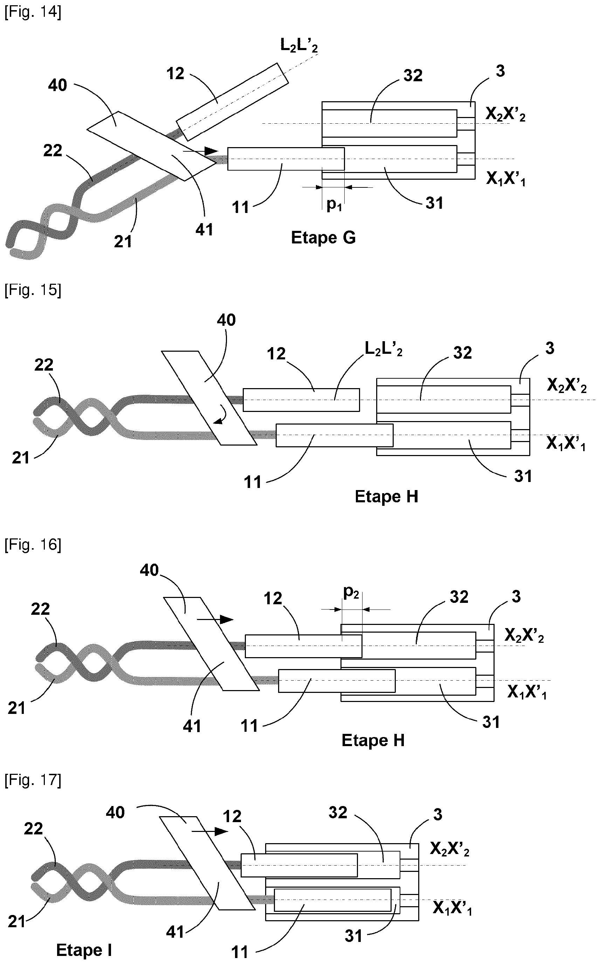

Puis on pré insère la première cosse 11 dans la première alvéole 31 sur une profondeur p₁ donnée, comme cela est illustré à la figure 14.

La profondeur p₁ est inférieure à la valeur du décalage D opéré à l'étape B.

A l'issue de l'étape G, la première cosse 11 ne conserve plus qu'un seul degré de liberté le long de l'axe d'insertion X₁X'₁ et demeure bloquée en rotation autour de ce même axe X₁X'₁ ainsi qu'en translation et en rotation autour des axes OY et OZ.

A l'aide du robot, **à l'étape H,** on fait tourner la pince d'insertion d'un angle sensiblement égal à l'angle -αₘ conféré à l'étape D. En pratique l'orientation dans l'espace de la deuxième cosse étant connue (Etape E), il suffit d'orienter la deuxième cosse selon la direction d'introduction. Ce mouvement a pour effet de replacer l'axe L₁L'₁ de la deuxième cosse 12 sensiblement dans l'axe d'introduction de la deuxième cosse dans l'alvéole 32 comme cela est illustré à la figure 15

On effectue les rotations de valeurs -α₂₁, -α₂₂, et les translations de valeur t₂₁ et t22 de manière à confondre l'axe longitudinal (L₂L'₂) de la deuxième cosse 12 avec l'axe d'insertion (X₂X'₂) de la deuxième cosse 12 dans la deuxième alvéole 32. On ajuste ensuite la position angulaire de la cosse autour de son axe longitudinal L₂L'₂ de la correction angulaire -α₂₃, et on pré insère la deuxième cosse 12 dans la deuxième alvéole 32 sur une profondeur p₂ donné, tout en poursuivant l'insertion de la première cosse 11, comme cela est illustré à la figure 16.

Compte tenu de la faible longueur de fil libre disponible entre la pince 40 et les cosses et entre la pince 40 et le début de la torsade, on s'arrange pour que les valeurs des translations t₁₁, t₁₂, t₂₁ et t₂₂ soient les plus faibles possibles en ajustant comme cela est prévu à l'étape A la distance d entre les pinces de maintien 71 et 72 à une valeur proche de la distance entre les axes X₁X'₁ et X₂X'₂. De même, la mise en oeuvre du centreur prévu à l'étape C' permet de réduire la valeur des corrections angulaires α₁₁, α₁₂, α₂₁ et α₂₂.

Ces précautions, permettent de garantir que la rotation et la translation de la pince d'insertion ont un effet nul sur le positionnement de la première cosse 11, qui est maintenue en position dans son alvéole 31.

A **l'étape I,** à l'aide du robot on déplace la pince d'insertion 40 dans la direction d'introduction XX' et on insère simultanément la première et la deuxième cosse, dans leurs alvéoles respectives 31 et 32 jusqu'à ce que la première cosse 11 soit complètement insérée, comme cela est illustré à la figure 17.

Pendant l'insertion des cosses dans leurs alvéoles 31 et 32 respectives du connecteur 3, on mesure, à l'aide d'une jauge de contrainte (non représentée), une force d'insertion des cosses et on émet une alerte lorsque ladite force d'insertion est supérieure ou inférieure à des seuils prédéterminés en fonction de la profondeur d'insertion. Une valeur trop forte signifie la présence d'une amorce de blocage susceptible de provoquer le flambage des fils en cas de poursuite de l'avancée de la pince d'insertion. Et une valeur trop faible peut signifier que l'insertion d'un des fils ne se fait plus correctement sous l'effet d'un flambage de ce dernier.

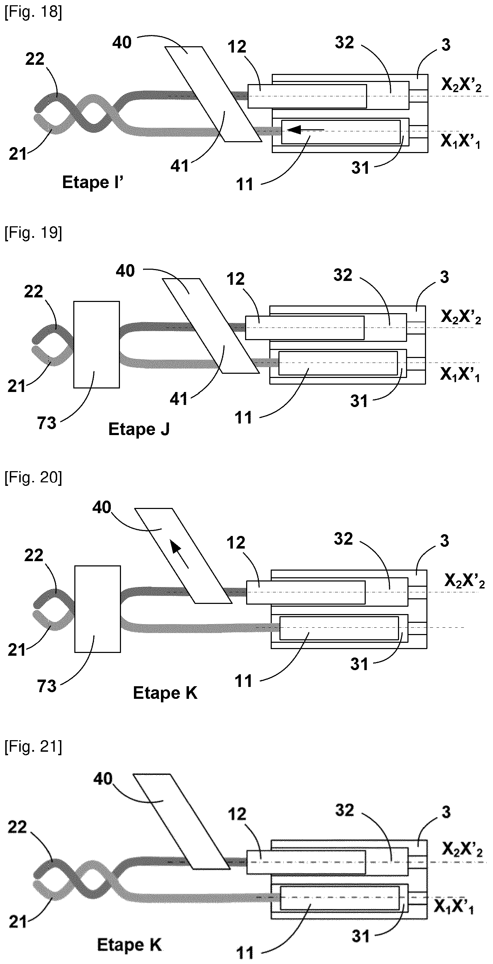

De manière optionnelle, à l'issue de l'étape I**,** au cours d'une **étape I'** illustrée à la figure 18, à l'aide du robot, on exerce sur le premier fil 21 une force d'amplitude donnée et réduite dans la direction inverse à la direction d'insertion pour s'assurer que la première cosse 11 est bien insérée dans son alvéole. On émet une alerte lorsque l'application de cette force a pour effet de faire ressortir ladite première cosse 11 de l'alvéole 31 en autorisant un déplacement de la pince d'insertion 40 dans la direction d'extraction.

A **l'étape J** illustrée à la figure 19, on saisit à l'aide d'une pince de reprise 73 simultanément le premier 11 et le deuxième fil 12 au niveau de la partie torsadée en amont de la pince d'insertion 40. La pince de reprise 73 est disposée sur la tête du robot, en aval de la pince d'insertion 40.

Au cours d'une **étape K** illustrée à la figure 20, tout en maintenant, à l'aide de la pince de reprise 72, les fils 21 et 22 dans la position obtenue à l'issue de l'étape I**,** on relâche la pince d'insertion 40 et, sans déplacer la tête du robot, on fait coulisser ladite pince d'insertion 40, pour saisir le seul deuxième fil 22 en un point de saisie situé entre la pince de reprise 72 et la deuxième cosse 12. Puis on retire la pince de reprise 73, comme cela est illustré à la figure 21.

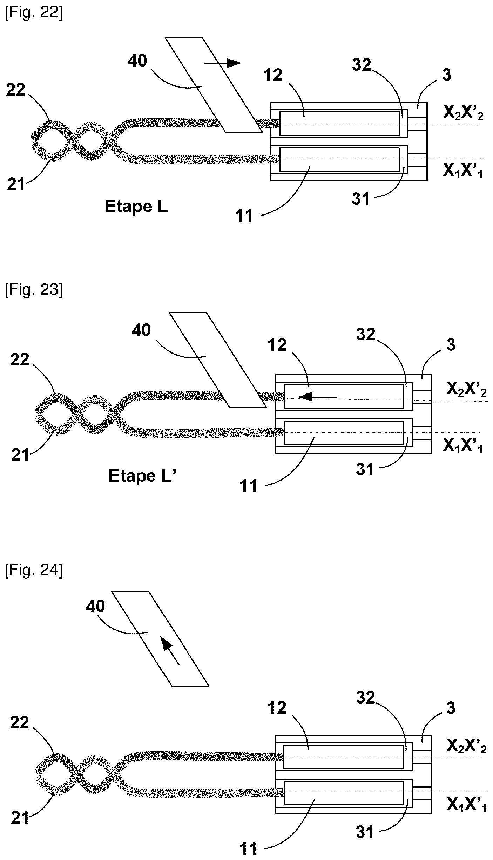

A **l'étape L,** illustrée à la figure 22, on déplace la pince d'insertion 40 dans la direction d'introduction jusqu'à ce que la deuxième cosse 12 soit complètement insérée.

Cette étape L peut être suivie d'une **étape L'** de contrôle illustrée à la figure 23, similaire à l'étape I' précédemment décrite.

La figure 24 marque la fin de l'introduction des deux cosses 11 et 12 dans leurs alvéoles respectives 31 et 32, permettant de libérer la pince d'insertion 40 et de replacer la tête du robot pour l'exécution d'un cycle suivant.

Pour assurer la précision des opérations d'alignement et d'insertion exposées ci-dessus, des étapes de calibrage du robot et des caméras sont réalisées à fréquence régulière, de manière à s'assurer que les positions dans le repère OXYZ restent précises et fidèles.

En effet, le procédé repose largement sur la précision de l'alignement des axes des cosses L₁L'₁ et L₂L'₂ avec les axes d'insertions X₁X'₁ et X₂X'₂, ce qui autorise des efforts minimes à exercer sur les fils pour les introduire dans leurs alvéoles respectives et par voie de conséquence, un risque de flambage des fils réduit pendant ces opérations.

### NOMENCLATURE

- 11 :: Première cosse.
- 12 :: Deuxième cosse.
- 12a :: Projection dans le plan P1 de la deuxième cosse.
- 12b :: Projection dans la Plan P2 de la deuxième cosse.
- 21 :: Cable de la première cosse.
- 22 :: Cable de la deuxième cosse.
- 3 :: Connecteur.
- 31 :: Première alvéole.
- 32 :: Deuxième alvéole.
- 40 :: Pince d'insertion.
- 41 :: Point de saisie du fil.
- 5 :: Moyen de séparation/écarteur.
- 71 :: Première pince de maintien.
- 72 :: Deuxième pince de maintien.
- 73 :: Pince de reprise.
- 81 :: Première caméra linéaire selon la direction YY'.
- 82 :: Deuxième caméra linéaire selon la direction ZZ'.
- 83 :: Premier émetteur de lumière selon la direction YY'.
- 84 :: Deuxième émetteur de lumière selon la direction ZZ'.
- 85 :: Réflecteurs selon la direction YY'.
- 86 :: Réflecteurs selon la direction ZZ'.
- 87 :: Rideau lumineux selon la direction YY'.
- 88 :: Rideau lumineux selon la direction ZZ'.
- 9 :: Centreur.
- 91, 92 :: Palettes.
- LL' :: Axe longitudinal de la cosse.
- XX' :: Axe d'insertion.
- YY' :: Axe transversal.
- ZZ' :: Axe vertical.
- α :: Ecart angulaire imposé aux filx.
- αₘ :: Ecart angulaire moyen imposé aux fils.
- D :: Décalage longitudinal entre la première et la deuxième cosse.
- d :: Distance entre les axes d'insertion de la première et de la deuxième alvéole.
- p₁, p₂:: Profondeur de l'insertion partielle.
- P₁, P₂ :: Plan de projection perpendiculaire aux axes YY' et ZZ'.
- L₁L'₁ :: Axe longitudinal de la première cosse.
- L₂L'₂ :: Axe longitudinal de la deuxième cosse.
- L₂₁L'₂₁ :: Projection dans le plan P1 de l'axe longitudinal de la cosse L₁L'₁.
- L₂₂L'₂₂ :: Projection dans le plan P2 de l'axe longitudinal de la cosse L₁L'₁.
- V :: Vecteur orienté porté par l'axe longitudinal de la cosse.
- V₂ :: Vecteur orienté porté par l'axe longitudinal de la deuxième cosse.
- V₂₁, V₂₂ :: Projections du vecteur V₂ dans les plans P₁ et P₂.
- X₁X'₁ :: Axe d'insertion de la première cosse.
- X₂X'₂ :: Axe d'insertion de la deuxième cosse.
- X₂₁X'₂₁ :: Projection dans le plan P1 de l'axe d'insertion XX'.
- X₂₂X'1₂₂ :: Projection dans le plan P2 de l'axe d'insertion XX'.
- α₁₁, α₁₂ :: Angle formé par la première cosse avec la direction d'insertion dans les plans P₁ et P₂.
- t₁₁, t₁₂ :: Translation de la première cosse selon les axes YY' et ZZ'.
- α₁₃ :: Angle formé par la première cosse autour de sa direction d'insertion.
- α₂₁, α₂₂ :: Angle formé par la deuxième cosse avec la direction d'insertion dans les plans P₁ et P₂.
- t₂₁, t₂₂ :: Translation de la deuxième cosse selon les axes YY' et ZZ'.
- α₂₃ :: Angle formé par la deuxième cosse autour de sa direction d'insertion.

## Revendications

1. Procédé d'insertion dans une première (31) et une deuxième (32) alvéole d'un connecteur (3), d'une première (11) et d'une deuxième (12) cosse, serties respectivement à l'extrémité d'un premier (21) et d'un deuxième (22) fil, torsadés entre eux, dans lequel au cours dudit procédé d'insertion, on exécute les étapes suivantes :
- Etape A : on saisit, du côté de l'extrémité des fils proche des cosses (11, 12), le premier (21) et le deuxième (22) fil respectivement à l'aide d'une première (71) et d'une deuxième (72) pince de maintien,
- Etape B : on translate la première pince de maintien (71) par rapport à la deuxième pince de maintien dans une direction parallèle à une direction d'insertion (XX') de la cosse dans l'alvéole, de manière à créer un décalage longitudinal d'une valeur (D) donnée entre l'extrémité de la première cosse (11) et l'extrémité de la deuxième cosse (12), **caractérisé par** les étapes suivantes:
- Etape C : à l'aide d'une pince d'insertion (40) montée sur la tête d'un robot apte à déplacer ladite pince d'insertion (40) en translation dans trois directions indépendantes (XX', YY', ZZ') et en rotation autour de chacune de ces trois directions, on saisit simultanément le premier et le deuxième fil (21, 22) en un point de saisie disposé entre les pinces de maintien (71, 72) et les cosses (11, 12), et on libère les pinces de maintien (71, 72),
- Etape D : à l'aide d'un moyen de séparation (5) on déplace le premier fil (11) de manière à créer un écart angulaire (α, αₘ) entre le premier (21) et le deuxième (22) fil.
- Etape E : à l'aide du robot, on fait avancer la pince d'insertion (41) selon la direction d'insertion (XX') de manière à présenter la deuxième cosse (12)
dans le champ de vision d'une première caméra (81) et d'une deuxième caméra (82), lesdits champs de vision étant orientés selon deux axes orthogonaux (ZZ', YY') situés dans un plan perpendiculaire à la direction d'insertion (XX') et, à l'aide des images formées par chacune des caméras (81, 82), on détermine la position (α₂₁, α₂₂, t₂₁, t₂₂), dans le repère (OXYZ), d'un axe longitudinal (L₂L'₂) de la deuxième cosse (12), ainsi que la position angulaire (α₂₃) de la deuxième cosse autour de l'axe d'insertion (X₂X'₂) de la deuxième cosse (12) dans son alvéole (32),
- Etape F : à l'aide du robot, on fait tourner la pince d'insertion d'un angle (-α, -αₘ) égal et de signe opposé à l'écart angulaire (α, αₘ) entre le premier et le deuxième fil conféré à l'étape D, et on présente la première cosse (11) dans le champ de la première caméra et de la deuxième caméra (81, 82) et, à l'aide des images formées par chacune des caméras, on détermine la position dans le repère (OXYZ) d'un axe longitudinal (L₁L'₁) de la première cosse, ainsi que la position angulaire (α₁₃) de la première cosse autour de l'axe d'insertion,
- Etape G : à l'aide du robot, on fait tourner et on déplace (α₁₁, α₁₂, t₁₁, t₁₂) la pince d'insertion (40) de manière à confondre l'axe longitudinal (L₁L'₁) de la première cosse avec l'axe d'insertion (X₁X'₁) de la première cosse dans la première alvéole, on ajuste la position angulaire (α₁₃) de la première cosse (11) autour de la direction d'insertion (X₁X'₁) par rapport à la position angulaire de l'alvéole, et on pré insère la première cosse dans la première alvéole sur une profondeur (p₁) donnée,
- Etape H : à l'aide du robot on fait tourner et on déplace (α₂₁, α₂₂, t₂₁, t₂₂) la pince d'insertion (40) de manière à confondre l'axe longitudinal (L₂L'₂) de la deuxième cosse (12) avec l'axe d'insertion (X₂X'₂) de la deuxième cosse (12) dans la deuxième alvéole (32), on ajuste la position angulaire (α₂₃) de la deuxième cosse (12) autour de la direction d'insertion (X₂X'₂) par rapport à la position angulaire de la deuxième alvéole (32), et on pré insère la deuxième cosse (12) dans la deuxième alvéole (32) sur une profondeur (p₂) donnée, tout en poursuivant l'insertion de la première cosse (11) dans son alvéole (31).

2. Procédé d'insertion selon la revendication 1 dans lequel on crée l'écart angulaire (α, αₘ) entre le premier (21) et le deuxième (22) fil en déplaçant le premier (21) fil supportant la première cosse (11) disposée longitudinalement en avant de la deuxième cosse (12).

3. Procédé selon l'une quelconque des revendications précédentes dans lequel le décalage longitudinal (D) entre la première (11) et la deuxième (12) cosse est compris entre 3mm et 10mm.

4. Procédé selon l'une quelconque des revendications précédentes, dans lequel l'écart angulaire (α, αₘ) entre le premier (21) et le deuxième (22) fil est compris entre 45° et 90°.

5. Procédé d'insertion selon l'une quelconque des revendications précédentes dans lequel, à l'issue de l'étape H on exécute les étapes suivantes :
- Etape I : à l'aide du robot on déplace la pince d'insertion (40) dans la direction d'introduction (XX') et on insère simultanément la première (11) et la deuxième (12) cosse dans leurs alvéoles respectives (31, 32) jusqu'à ce que la première cosse (11) soit complètement insérée,
- Etape J : on saisit simultanément le premier (21) et le deuxième (22) fil à l'aide d'une pince de reprise (73) en amont de la pince d'insertion (40),
- Etape K : on relâche la pince d'insertion (40) et on fait coulisser ladite pince d'insertion (40) sur la tête du robot pour saisir le seul deuxième fil (22) en un point de saisie situé entre la pince de reprise (73) et la deuxième cosse (12),
- Etape L : à l'aide du robot on déplace la pince d'insertion (40) dans la direction d'introduction (XX') jusqu'à ce que la deuxième cosse (12) soit complètement insérée.

6. Procédé d'insertion selon la revendication 5 dans lequel, aux étapes l' et L', à l'issue respectivement des étapes I et L, lorsqu'une cosse (11, 12) est complètement insérée, on exerce à l'aide du robot une force d'amplitude donnée dans la direction inverse à la direction d'insertion (XX') et on émet une alerte lorsque l'application de cette force a pour effet de faire ressortir ladite cosse de l'alvéole.

7. Procédé d'insertion selon l'une quelconque des revendications précédentes dans lequel, pendant l'insertion des cosses (11, 12) dans les alvéoles (31) 32) du connecteur (3), on mesure une force d'insertion et on émet une alerte lorsque ladite force d'insertion est supérieure ou inférieure à des seuils prédéterminés en fonction de la profondeur d'insertion.

8. Procédé d'insertion selon l'une quelconque des revendications précédentes dans lequel, on ajuste la position de la première pince de maintien (71) par rapport à la position de la deuxième pince de maintien (72) de sorte que la distance (d) entre l'axe longitudinal (L₁L'₁) de la première cosse (11) et l'axe longitudinal (L₂L'₂) de la deuxième cosse (12) , soit sensiblement égale à la distance entre l'axe d'insertion (X₁X'₁) de la première cosse (11) dans la première alvéole (31) et l'axe d'insertion (X₂X'₂) de la deuxième cosse (12) dans la deuxième alvéole (32).

9. Procédé d'insertion selon l'une quelconque des revendications précédentes dans lequel, à une étape C', après avoir achevé l'étape C et préalablement à l'étape D, à l'aide d'un centreur (9), on positionne les fils (21, 22) situés entre les cosses (11, 12) et la pince d'insertion (40) sensiblement dans un plan prédéterminé.

10. Dispositif d'insertion dans une première (31) et une deuxième (32) alvéole d'un connecteur (3), d'une première (11) et d'une deuxième (12) cosse, serties respectivement à l'extrémité d'un premier (21) et d'un deuxième (22) fil, torsadés entre eux **caractérisé en ce qu'**il comprend :
- une première (71) et une deuxième (72) pince de maintien aptes à se déplacer l'une par rapport à l'autre selon une direction d'insertion (XX'),
- une pince d'insertion (40) pour saisir simultanément le premier (21) et le deuxième (22) fil, fixée sur la tête d'un robot apte à déplacer ladite pince d'insertion (40) en translation dans trois directions indépendantes (XX', YY', ZZ') et en rotation autour de chacune de ces trois directions,
- une pince de reprise (73),
- un moyen de séparation (5) pour créer un écart angulaire (α, αₘ) entre le premier (21) et le deuxième (22) fil,
- une première caméra (81) et une deuxième caméra (82) dont les champs de vision sont orientés selon deux axes orthogonaux (YY', ZZ') situés dans un plan perpendiculaire à la direction d'insertion (XX'),
- une unité centrale reliée au robot et aux caméras (81, 82) comprenant des instructions codées pour analyser les images provenant desdites caméras (81, 82) et piloter les mouvements de la première (71) et la deuxième (72) pince de maintien, de la pince de reprise (73), du moyen de séparation (5) et de la tête du robot supportant la pince d'insertion (40), selon l'une quelconque des revendications 1 à 9.

## Patentansprüche

1. Verfahren zum Einführen einer ersten (11) und einer zweiten (12) Hülse in eine erste (31) und eine zweite (32) Buchse eines Verbinders (3), die jeweils an dem Ende eines ersten (21) und eines zweiten (22) Drahtes untereinander verdrillt gepresst sind, wobei während des Verfahrens zum Einführen die folgenden Schritte ausgeführt werden:
- Schritt A: auf der Seite des Endes der Drähte nahe den Hülsen (11, 12) werden der erste (21) und der zweite (22) Draht jeweils mithilfe einer ersten (71) und einer zweiten (72) Halteklemme gegriffen,
- Schritt B: die erste Halteklemme (71) wird relativ zu der zweiten Halteklemme in eine parallele Richtung zu einer Einführrichtung (XX') der Hülse in die Buchse translatiert, derart, dass ein Längsversatz eines Wertes (D) erzeugt wird, der von dem Ende der ersten Hülse (11) bis zu dem Ende der zweiten Hülse (12) gegeben ist, **gekennzeichnet durch** die folgenden Schritte:
- Schritt C: mithilfe einer Einführklemme (40), die an dem Kopf eines Roboters angebracht ist, der die Einführklemme (40) translatorisch in drei unabhängige Richtungen (XX', YY', ZZ') bewegen und um jede dieser drei Richtungen drehen kann, werden der erste und der zweite Draht (21, 22) gleichzeitig an einem Greifpunkt, die zwischen den Halteklemmen (71, 72) und den Hülsen (11, 12) angeordnet ist, gegriffen und die Halteklemmen (71, 72) werden gelöst,
- Schritt D: mithilfe eines Trennmittels (5) wird der erste Draht (11) bewegt, derart, dass ein Winkelabstand (α, αₘ) von dem ersten (21) bis zu dem zweiten (22) Draht erzeugt wird,
- Schritt E: mithilfe des Roboters wird die Einführklemme (41) entlang der Einführrichtung (XX') vorgeschoben, derart, dass die zweite Hülse (12) in dem Sichtfeld einer ersten Kamera (81) und einer zweiten Kamera (82) dargestellt wird, wobei die Sichtfelder entlang von zwei orthogonalen Achsen (ZZ', YY') ausgerichtet sind, die in einer Ebene senkrecht zu der Einführrichtung (XX') gelegen sind, und mithilfe von Bildern, die durch jede der Kameras (81, 82) erzeugt werden, wird die Position (α₂₁, α₂₂, t₂₁, t₂₂) einer Längsachse (L₂L'₂) der zweiten Hülse (12) in dem Bezugssystem (OXYZ), sowie die Winkelstellung (α₂₃) der zweiten Hülse um die Einführachse (X₂X'₂) der zweiten Hülse (12) in ihrer Buchse (32) bestimmt,
- Schritt F: mithilfe des Roboters wird die Einführklemme um einen Winkel (-α, -αₘ) gedreht, der gleich dem Winkelabstand (α, αₘ) zwischen dem ersten und dem zweiten Draht aus Schritt D ist und das umgekehrte Vorzeichen von diesem aufweist, und die erste Hülse (11) in dem Feld der ersten Kamera und der zweiten Kamera (81, 82) dargestellt wird und mithilfe der Bilder, die durch jede der Kameras erzeugt werden, wird die Position in dem Bezugssystem (OXYZ) einer Längsachse (L₁L'₁) der ersten Hülse sowie die Winkelposition (α₁₃) der ersten Hülse um die Einführachse bestimmt,
- Schritt G: mithilfe des Roboters wird die Einführklemme (40) gedreht und bewegt (α₁₁, α₁₂, t₁₁, t₁₂), derart, dass die Längsachse (L₁L'₁) der ersten Hülse in die Einführachse (X₁X'₁) der ersten Hülse in die erste Buchse übergeht, die Winkelposition (α₁₃) der ersten Hülse (11) wird um die Einführrichtung (X₁X'₁) relativ zu der Winkelposition der Buchse angepasst und die erste Hülse wird in die erste Buchse in einer gegebenen Tiefe (p₁) voreingefügt,
- Schritt H: mithilfe des Roboters wird die Einführklemme (40) gedreht und bewegt (α₂₁, (α₂₂, t₂₁, t₂₂), derart, dass die Längsachse (L₂L'₂) der zweiten Hülse (12) in die Einführachse (X₂X'₂) der zweiten Hülse (12) in die zweite Buchse (32) übergeht, die Winkelposition (α₂₃) der zweiten Hülse (12) wird um die Einführrichtung (X₂X'₂) relativ zu der Winkelposition der zweiten Buchse (32) angepasst und die zweite Hülse (12) wird in die zweite Buchse (32) in einer gegebenen Tiefe (p₂) voreingesteckt, während die erste Hülse (11) weiter in ihre Buchse (31) eingeführt wird.

2. Verfahren zum Einführen nach Anspruch 1, wobei der Winkelabstand (α, αₘ) zwischen dem ersten (21) und dem zweiten (22) Draht durch Bewegen des ersten (21) Drahts erzeugt wird, der die erste Hülse (11) trägt, die vor der zweiten Hülse (12) in Längsrichtung angeordnet ist.

3. Verfahren nach einem der vorhergehenden Ansprüche, wobei der Längsversatz (D) zwischen der ersten (11) und der zweiten (12) Hülse zwischen 3 mm bis 10 mm beträgt.

4. Verfahren nach einem der vorhergehenden Ansprüche, wobei der Winkelabstand (α, αₘ) von dem ersten (21) zu dem zweiten (22) Draht von 45° bis 90° beträgt.

5. Verfahren zum Einführen nach einem der vorhergehenden Ansprüche, wobei nach Schritt H die folgenden Schritte ausgeführt werden:
- Schritt I: mithilfe des Roboters wird die Einführklemme (40) in der Einführrichtung (XX') bewegt und gleichzeitig werden die erste (11) und die zweite (12) Hülse in ihre jeweiligen Buchsen (31, 32) eingeführt, bis die erste Hülse (11) vollständig eingeführt ist,
- Schritt J: gleichzeitig werden der erste (21) und der zweite (22) Draht mithilfe einer Entnahmeklemme (73) vor der Einführklemme (40) gegriffen,
- Schritt K: die Einführklemme (40) wird gelöst und die Einführklemme (40) wird auf den Kopf des Roboters gleiten gelassen, um den einzelnen zweiten Draht (22) an einem Greifpunkt, der zwischen der Entnahmeklemme (73) und der zweiten Hülse (12) gelegen ist, zu greifen,
- Schritt L: mithilfe des Roboters wird die Einführklemme (40) in der Eingangsrichtung (XX') bewegt, bis die zweite Hülse (12) vollständig eingeführt ist.

6. Verfahren zum Einführen nach Anspruch 5, wobei in den Schritten I' und L', nach dem Schritt I beziehungsweise L, wenn eine Hülse (11, 12) vollständig eingeführt ist, mithilfe des Roboters eine gegebene Amplitudenkraft in der zu der Einführrichtung (XX') entgegengesetzten Richtung ausgeübt wird, und eine Warnung ausgegeben wird, wenn die Ausübung dieser Kraft dazu führt, dass die Hülse aus der Buchse herausragt.

7. Verfahren zum Einführen nach einem der vorhergehenden Ansprüche, wobei während des Einführens der Hülsen (11, 12) in die Buchsen (31) 32) des Verbinders (3) eine Einführkraft gemessen wird und eine Warnung ausgegeben wird, wenn die Einführkraft abhängig von der Einführtiefe größer oder kleiner als die vorbestimmten Schwellenwerte ist.

8. Verfahren zum Einführen nach einem der vorhergehenden Ansprüche, wobei die Position der ersten Halteklemme (71) relativ zu der Position der zweiten Halteklemme (72) derart angepasst wird, dass der Abstand (d) von der Längsachse (L₁L'₁) der ersten Hülse (11) zu der Längsachse (L₂L'₂) der zweiten Hülse (12) im Wesentlichen gleich dem Abstand von der Einführachse (X₁X'₁) der ersten Hülse (11) in die erste Buchse (31) zu der Einführachse (X₂X'₂) der zweiten Hülse (12) in die zweite Buchse (32) ist.

9. Verfahren zum Einführen nach einem der vorhergehenden Ansprüche, wobei in einem Schritt C', nachdem Schritt C abgeschlossen ist und vor Schritt D, mithilfe einer Zentriereinrichtung (9) die Drähte (21, 22), die zwischen den Hülsen (11, 12) und der Einführklemme (40) gelegen sind, im Wesentlichen in einer vorbestimmten Ebene positioniert werden.

10. Vorrichtung zum Einführen einer ersten (11) und einer zweiten (12) Hülse in eine erste (31) und eine zweite (32) Buchse eines Verbinders (3), die jeweils an dem Ende eines ersten (21) und eines zweiten (22) Drahtes untereinander verdrillt gepresst sind, **dadurch gekennzeichnet, dass** sie Folgendes umfasst:
- eine erste (71) und eine zweite (72) Halteklemme, die sich entlang einer Einführrichtung (XX') relativ zueinander bewegen können,
- eine Einführklemme (40) zum gleichzeitigen Greifen des ersten (21) und des zweiten (22) Drahtes, die an dem Kopf eines Roboters befestigt ist, der die Einführklemme (40) translatorisch in drei unabhängige Richtungen (XX', YY', ZZ') bewegen und um jede dieser drei Richtungen drehen kann,
- eine Entnahmeklemme (73),
- ein Trennmittel (5) zum Erzeugen eines Winkelabstands (α, αₘ) von dem ersten (21) zu dem zweiten (22) Draht,
- eine erste Kamera (81) und eine zweite Kamera (82), deren Sichtfelder entlang zweier orthogonaler Achsen (YY', ZZ') ausgerichtet sind, die in einer Ebene senkrecht zu der Einführrichtung (XX') gelegen sind,
- eine mit dem Roboter und den Kameras (81, 82) verbundene Zentraleinheit, die kodierte Anweisungen zum Analysieren der von den Kameras (81, 82) stammenden Bilder und Steuern der Bewegungen der ersten (71) und der zweiten (72) Halteklemme, der Entnahmeklemme (73), des Trennmittels (5) und des Roboterkopfs umfasst, der die Einführklemme (40) trägt, nach einem der Ansprüche 1 bis 9.

## Claims

1. Method for inserting a first terminal (11) and a second terminal (12) into a first receptacle (31) and a second receptacle (32) of a connector (3), which terminals are crimped onto the end of a first wire (21) and a second wire (22), respectively, which wires are twisted together, the following steps being carried out during said insertion method:
- step A: at the end of the wires close to the terminals (11, 12), the first wire (21) and the second wire (22) are gripped by means of a first retaining clip (71) and a second retaining clip (72), respectively,
- step B: the first retaining clip (71) is translated relative to the second retaining clip in a direction parallel to a direction (XX') of insertion of the terminal into the receptacle, so as to create a longitudinal offset of a given value (D) between the end of the first terminal (11) and the end of the second terminal (12), **characterized by** the following steps:
- step C: by means of an insertion clip (40) mounted on the head of a robot capable of translating said insertion clip (40) in three independent directions (XX', YY', ZZ') and of rotating said clip about each of these three directions, the first and the second wire (21, 22) are simultaneously gripped at a gripping point arranged between the retaining clips (71, 72) and the terminals (11, 12), and the retaining clips (71, 72) are released,
- step D: by means of a separation means (5), the first wire (11) is moved so as to create an angular deviation (α, αₘ) between the first wire (21) and the second wire (22),
- step E: by means of the robot, the insertion clip (41) is fed in the insertion direction (XX') so as to have the second terminal (12) in the field of view of a first camera (81) and of a second camera (82), said fields of view being oriented along two orthogonal axes (ZZ', YY') located in a plane perpendicular to the insertion direction (XX') and, using the images formed by each of the cameras (81, 82), the position (α₂₁, α₂₂, t₂₁, t₂₂), in the frame of reference (OXYZ), of a longitudinal axis (L₂ L'₂) of the second terminal (12), as well as the angular position (α₂₃) of the second terminal about the axis (X₂ X'₂) of insertion of the second terminal (12) into its receptacle (32), is determined,
- step F: by means of the robot, the insertion clip is rotated by an angle (-α, -αₘ) which is equal and opposite in sign to the angular deviation (α, αₘ) between the first and the second wire that is provided in step D, and the first terminal (11) is in the field of view of the first camera and of the second camera (81, 82) and, using the images formed by each of the cameras, the position, in the frame of reference (OXYZ), of a longitudinal axis (L₁ L'₁) of the first terminal, as well as the angular position (α₁₃) of the first terminal about the insertion axis, is determined,
- step G: by means of the robot, the insertion clip (40) is rotated and moved (α₁₁, α₁₂, t₁₁, t₁₂) so as to make the longitudinal axis (L₁, L'₁) of the first terminal coincide with the axis (X₁, X'₁) of insertion of the first terminal into the first receptacle, the angular position (α₁₃) of the first terminal (11) about the insertion direction (X₁, X'₁) is adjusted relative to the angular position of the receptacle, and the first terminal is pre-inserted into the first receptacle to a given depth (pi), and
- step H: by means of the robot, the insertion clip (40) is rotated and moved (α₂₁, α₂₂, t₂₁, t₂₂) so as to make the longitudinal axis (L₂, L'₂) of the second terminal (12) coincide with the axis (X₂, X'₂) of insertion of the second terminal (12) into the second receptacle (32), the angular position (α₂₃) of the second terminal (12) about the insertion direction (X₂, X'₂) is adjusted relative to the angular position of the second receptacle (32), and the second terminal (12) is pre-inserted into the second receptacle (32) to a given depth (p₂), while continuing to insert the first terminal (11) into its receptacle (31).

2. Insertion method according to claim 1, wherein the angular deviation (α, αₘ) between the first wire (21) and the second wire (22) is created by moving the first wire (21) supporting the first terminal (11) that is arranged longitudinally in front of the second terminal (12).

3. Method according to either of the preceding claims, wherein the longitudinal offset (D) between the first terminal (11) and the second terminal (12) is between 3 mm and 10 mm.

4. Method according to any of the preceding claims, wherein the angular deviation (α, αₘ) between the first wire (21) and the second wire (22) is between 45° and 90°.

5. Insertion method according to any of the preceding claims, wherein, after step H, the following steps are carried out:
- step I: by means of the robot, the insertion clip (40) is moved in the insertion direction (XX'), and the first terminal (11) and the second terminal (12) are simultaneously inserted into their respective receptacles (31, 32) until the first terminal (11) is completely inserted,
- step J: the first wire (21) and the second wire (22) are simultaneously gripped by means of a handling clip (73) upstream of the insertion clip (40),
- step K: the insertion clip (40) is released and said insertion clip (40) is slid on the head of the robot so as to grip the single second wire (22) at a gripping point located between the handling clip (73) and the second terminal (12), and
- step L: by means of the robot, the insertion clip (40) is moved in the insertion direction (XX') until the second terminal (12) is completely inserted.

6. Insertion method according to claim 5, wherein, in steps I' and L', after steps I and L, respectively, when a terminal (11, 12) is completely inserted, a force having a given amplitude in the direction opposite to the insertion direction (XX') is exerted by means of the robot, and an alert is issued when the application of this force has the effect of making said terminal come out of the receptacle again.

7. Insertion method according to any of the preceding claims, wherein, during the insertion of the terminals (11, 12) into the receptacles (31, 32) of the connector (3), an insertion force is measured and an alert is issued when said insertion force is greater or less than predetermined thresholds as a function of the insertion depth.

8. Insertion method according to any of the preceding claims, wherein the position of the first retaining clip (71) is adjusted relative to the position of the second retaining clip (72) such that the distance (d) between the longitudinal axis (L₁, L'₁) of the first terminal (11) and the longitudinal axis (L₂, L'₂) of the second terminal (12) is substantially equal to the distance between the axis (X₁, X'₁) of insertion of the first terminal (11) into the first receptacle (31) and the axis (X₂, X'₂) of insertion of the second terminal (12) into the second receptacle (32).

9. Insertion method according to any of the preceding claims wherein, in a step C', after having completed step C and prior to step D, the wires (21, 22) located between the terminals (11, 12) and the insertion clip (40) are positioned substantially in a predetermined plane by means of a centering device (9).

10. Device for inserting a first terminal (11) and a second terminal (12) into a first receptacle (31) and a second receptacle (32) of a connector (3), which terminals are crimped onto the end of a first wire (21) and a second wire (22), respectively, which wires are twisted together, **characterized in that** said device comprises:
- a first retaining clip (71) and a second retaining clip (72) which are capable of moving relative to one another in an insertion direction (XX'),
- an insertion clip (40) for simultaneously gripping the first wire (21) and the second wire (22), which clip is secured to the head of a robot capable of translating said insertion clip (40) in three independent directions (XX', YY', ZZ') and of rotating said clip about each of these three directions,
- a handling clip (73),
- a separation means (5) for creating an angular deviation (α, αₘ) between the first wire (21) and the second wire (22),
- a first camera (81) and a second camera (82) of which the fields of view are oriented along two orthogonal axes (YY', ZZ') located in a plane perpendicular to the insertion direction (XX'), and
- a central processing unit connected to the robot and to the cameras (81, 82) and comprising coded instructions for analyzing the images from said cameras (81, 82) and for controlling the movements of the first retaining clip (71) and the second retaining clip (72), of the handling clip (73), of the separation means (5) and of the robot head supporting the insertion clip (40), according to any of claims 1 to 9.
